# EUROPÄISCHE PATENTSCHRIFT

(11) **EP 0 968 771 B1**
(45) Veröffentlichungstag und Bekanntmachung des Hinweises auf die Patenterteilung: **08.09.2004**
(21) Anmeldenummer: 98810567.2
(22) Anmeldetag: 22.06.1998
(51) Int. Cl.: B05D 1/40, B05C 11/02, B65G 13/02

(54) **Verfahren und Vorrichtung zur berührungslosen Kraftübertragung**
Process and apparatus for imparting a force to an object without contact
Procédé et appareil pour appliquer une force à un object sans le toucher

(43) Veröffentlichungstag der Anmeldung: 05.01.2000
(73) Patentinhaber: Farnsburg Engineering AG, 4463 Buus (CH)
(72) Erfinder: Baur, Jörg, 4463 Buus (CH)
(74) Vertreter: Wilke, Jochen

(56) Entgegenhaltungen:
- FR-A- 1 455 038

## Beschreibung

Die Erfindung betrifft ein Verfahren zur berührungslosen Kraftübertragung auf einen festen Körper oder ein viskoses Material und eine Vorrichtung zur Durchführung dieses Verfahrens.

In vielen verschiedenen Bereichen der Tech. nik, beispielsweise bei Herstellungs- und Bearbeitungsverfahren, in der Fordertechnitt etc. wird die berührungslose Übertragung von Kraft oder Impuls auf ein Materlal oder einen festen Körper benötlgt. Ein typlsches Beispiel ist das Aufbringen von hochviskosem Beschichtungsmaterlal, z. B. Kleber, Gummi, Lack etc., auf einen Träger. Das Auftragen mit einem das Beschichtungsmaterial berührenden Werkzeug, beispielsweise einer Walze, einem Spachtel oder dgl. führt dazu, dass das aufzutragende Material am Werkzeug haftet und dass dieses innerhalb mehr oder weniger kurzer Zeit ausgetauscht und/oder gereinigt werden muss.

Es gibt bereits unterschiedliche Lösungsansätze für diese Art von Problemen. Ein herkömmlicher Lösungsversuch ist der Einsatz von abweisenden Materialien. Ein anderer Lösungsversuch besteht darin, elektrostatische Aufladungen für die Abweisung nutzbar zu machen. Schliesslich wurde auch schon der Einsatz von Luftkissen. die durch Düsen erzeugt werden. vorgeschlagen.

Jede dieser bekannten Lösungen kann nur ein relativ eng begrenztes Problem lösen. So kann z. B. ein Luftkissen tatsachlich das Berühren zwischen einem abzulenkenden, zu transportierenden oder zu bearbeitenden Körper und einer Unterlage verhindern. Aber Materialien mit niedriger Viskosität können einem durch Düsen erzeugten Luftkissen nicht ausgesetzt werden, weil sie von diesem einfach weggeblasen würden.

Der Erfindung liegt die Aufgabe zugrunde, eine Lösung für die berührungslose Kraftübertragung zu finden, die sich für einen vielseitigeren Einsatz eignet als die bekannten Verfahren.

Erfindungsgemäss wird dies durch ein Verfahren zur berührungslosen Beschichtung eines Trägers mit einem viskosen Material und/oder berührungslosen Umformung einer formlos auf einen Träger aufgebrachten Materialmenge und/oder Verteilung eines viskosen Materials auf einem Träger (1) gelöst, indem der Träger relativ zu einer mit hoher Geschwindigkeit umlaufenden Fläche. gebildet aus mindestens einer rotierenden Walze und/oder eines über Walzen laufenden Bandes, bewegt wird. das auf den Träger aufgebrachte viskose Material zwischen Träger und umlaufender Fläche hindurchgeführt wird, wobei über ein Luftpolster, dass sich an der mit hoher Geschwindigkeit umlaufenden Fläche aufbaut, ein Kraft- bzw. Impulsübertrag auf das viskose Material erfolgt und dadurch ein berührungsloses Beschichten. Umformen und/oder Verteilen des viskosen Materials stattfindet. Dabei die Kraft bzw. der Impuls mittels der sich an einer mit hoher Geschwindigkeit umlaufenden Fläche aufbauenden Grenzschicht auf das viskose Material übertragen. Die erfindungsgemasse Vorrichtung zeichnet sich dementsprechend dadurch aus. dass das die mit hoher Geschwindigkeit umlaufende Fläche gebildet wird aus mindestens einer rotlerenden Walze oder einem über Walzen laufenden Band.

Im folgenden sind anhand der beiliegenden Zeichnungen Ausführungsbeispiele der Erfindung beschrieben. Es zeigen:
- Fig. 1: eine schematische Darstellung des Verfahrens;
- Fig. 2: eine schematische Darstellung zweier Varianten bei einem Beschichtungsvertahren:
- Fig. 3: eine schematische Darstellung einer nicht erfindung gemäßen Transportvorrichtung;
- Fig. 4: eine Lösung für eine Materialablenkung;
- Fig. 5: eine schematische Darstellung einer nicht erfindungs gemäßen Ablenkvorrichtung in einer Förderanlage;
- Fig. 6: eine Gestaltungsvariante der Vorrichtung
- Fig. 7: eine weitere Gestaltungsvariante der Vorrichtung:
- Fig. 8: eine alternative Ausführungstorm der umlautenden Flache und
- Fig. 9: eine Darstellung von Varlanten der Walzenanordnung.

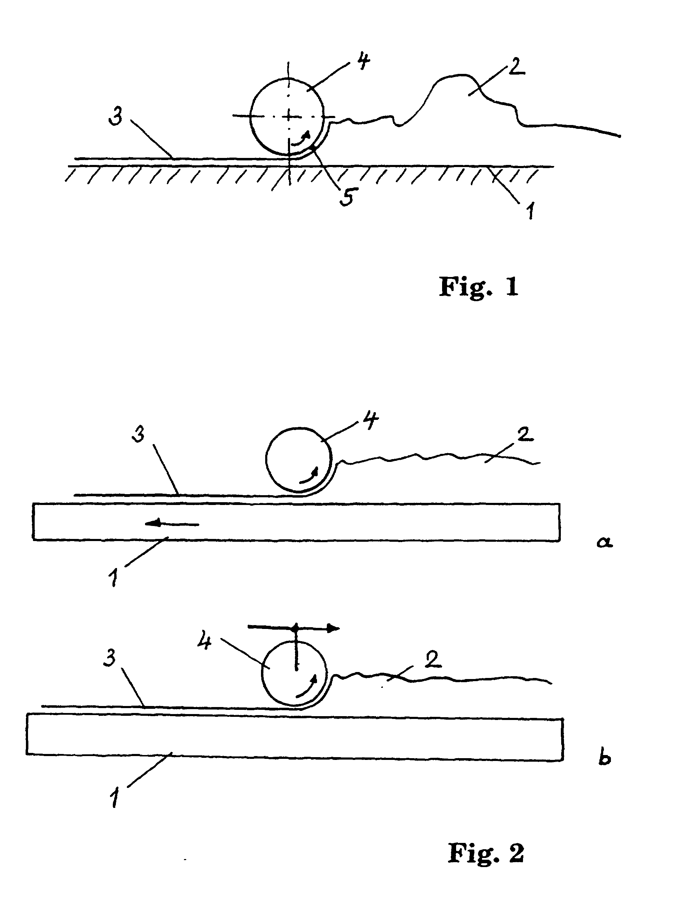

Das In Fig. 1 dargestellte Verfahrensschema zeigt die Beschichtung eines Trägers 1 mit einem viskosen Material, d.h. die Umformung einer formlos aufgebrachten Materialmenge 2 in eine gleichmässig dicke Schicht 3. Diese Umformung erfolgt mittels einer mit hoher Geschwindigkeit rotierenden Walze 4. Durch die hohe Drehgeschwindigkeit baut sich an der Walzenoberfläche ein Luftpolster 5 auf. Dieses Luftpolster verhindert Innerhalb physikalischer Grenzen die Berührung zwischen der Walze 4 und dem umzuformenden Material 2.

Das Luftpolster ist umso härter, je höher die Drehzahl der Walze ist. Ausserdem erzeugt eine glatte Walzenoberfläche ein härteres, eine rauhe Oberfläche ein weicheres Luftpolster. Dafür baut eine rauhere Oberfläche ein Luftpolster schon bei geringerer Drehzahl auf.

Der Aufbau des Luftpolsters kann zudem durch Längsprofilierung der Walze verbessert werden. Es bestehen also mehrere Möglichkeiten, den Aufbau des Luftpolsters und dessen Härte zu beeinflussen und an die Erfordernisse oder eine spezielle Problemstellung anzupassen.

Die Drehzahl einer Walze mit 100 mm Durchmesser ist typischerweise etwa 3000 UpM. Allerdings ist die geeignete Drehzahl bzw. die Umfangsgeschwindigkeit auch von dem zu bearbeitenden bzw. zu transportierenden Material ab.

Die Walzen können je nach ihrer Anwendung unterschiedliche Durchmesser und beliebige Breite besitzen.

Der Antrieb der Walze kann auf verschiedene Weise erfolgen, entweder direkt durch einen die Nabe antreibenden Motor. Ober einen Treibriemen oder einen In die Walze eingebauten Motor. Andere Antriebsvarianten sind ebenfalls moglich. wie z.B. pneumatisch etc.

Für den Vorschub der Walze relatlv zur Unterlage bzw. zum zu bearbeitenden Material sind, wie in Fig. 2 gezeigt, zwei unterschiedliche Varianten möglich. Es kann entweder, wie Fig 2a zeigt, die Walze stationär sein und die Unterlage relativ zu ihr angetrieben werden. Alternativ dazu kann, wie Fig. 2 b zeigt, die Unterlage stationär sein und die Walze relativ dazu verschoben werden

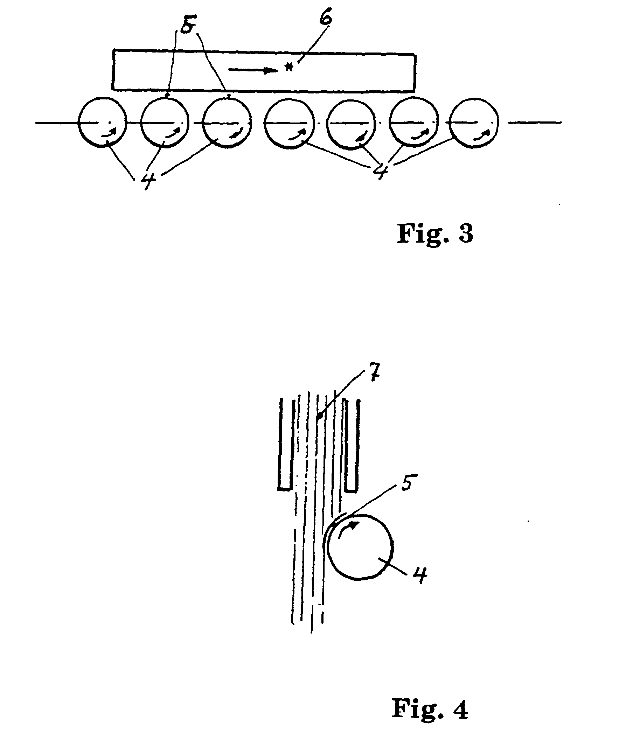

Die in Fig. 3 schematisch gezeigte nicht erfindung gemäßen Transporteinrichtung besitzt eine Anzahl hintereinander angeordneter Walzen 4, auf deren Luftpolster 5 sich ein zu transportierender Gegenstand 6 befindet. Die Fortbewegung des Gegenstandes erfolgt entweder durch seinen eigenen Antrieb oder durch einen Fremdantrieb. Das Luftpolster 5 hat dann, wenn alle Walzen in der gleichen Richtung rotieren, ebenfalls eine Bewegungsrichtung und vermittelt dem aufliegenden Körper einen von dessen Gewicht und Form abhängigen Vorschub. Wenn dies vermieden werden soll, oder um dies im Sinne einer Steuerung zu beeinflussen, kann es zweckmassig sein, einzelne Walzen in gegenlaufiger Richtung rotieren zu lassen.

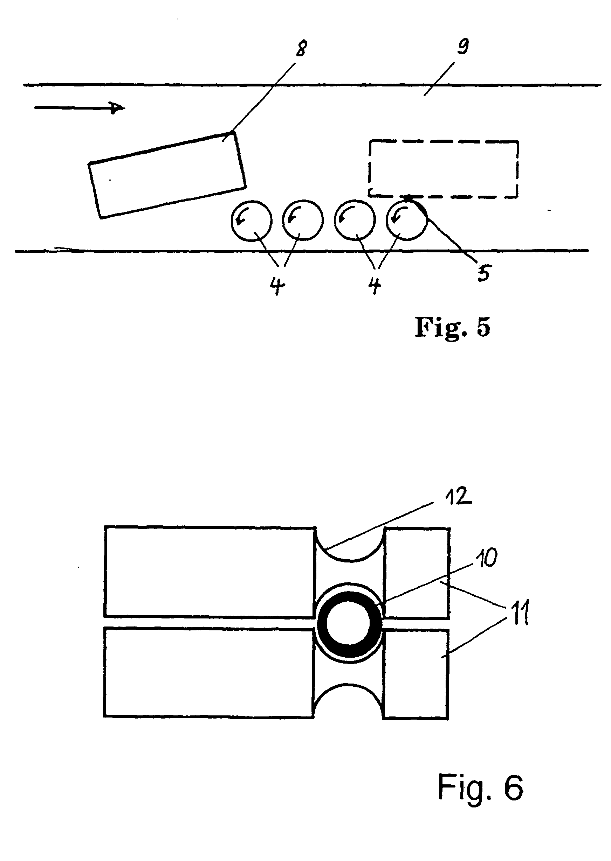

Das Verfahren ist, wie in Fig. 4 gezeigt, auch zur Ablenkung eines fliessenden viskosen Materials 7 geeignet. Ebenfalls ist es, wie in Fig. 5 gezeigt zur Ablenkung von festen Körpern 8 geeignet. Die Körper 8 befinden sich zunächst ungeordnet auf einem Förderband 9 und werden durch die walzen 4 mittels des von ihnen erzeugten Luftpolsters 5 in der Mitte des Bandes ausgerichtet

Das Verfahren eignet sich auch besonders gut zur Verarbeitung von heissen Materialien, weil die Walzen sehr wirkungsvoll gekühlt werden können. Dies ist insbesondere bei einem Luftantrieb der Walzen bereits zu einem gewissen Grad vorgegeben.

Flächige Beschichtungen sind beispielsweise in der Spanplatten- und Sperrholzherstellung üblich. Mit dem erfindungsgemässen Verfahren sind aber auch Beschichtungen auf anderen als ebenen Flächen möglich. Ein Beispiel ist die Gummierung von Schläuchen 10, die in Fig. 6 gezeigt ist. Für diese Bearbeitung sind zwei Walzen 11 mit entsprechender quer zur Achse angeordneter Profilierung 12 einander gegenüber angeordnet.

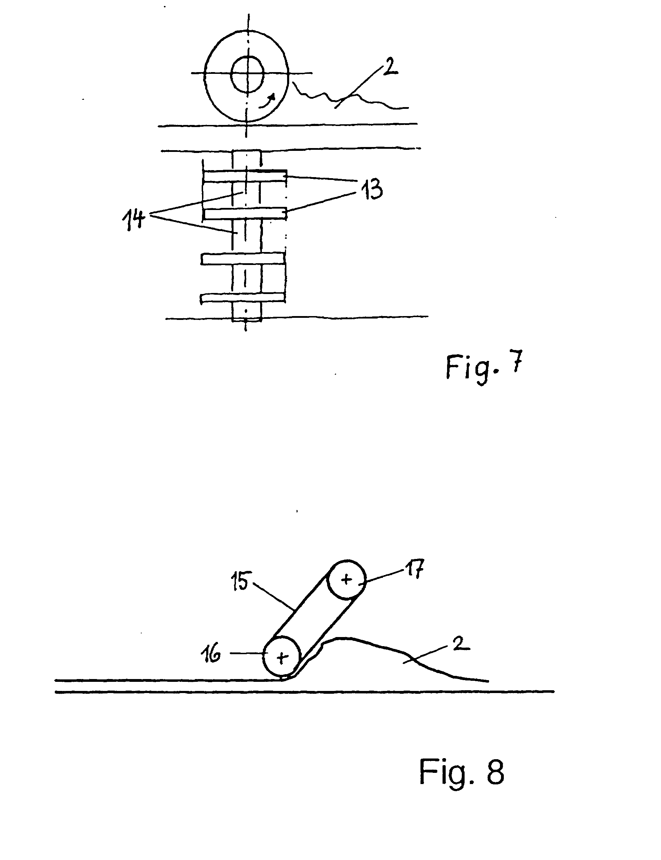

Die Profilierung der Walzen kann auch in der in Fig. 7 gezeigten Form vorliegen, in der die Walze z. B. aus Scheiben 13 und 14 unterschiedlichen Durchmessers zusammengesetzt ist. Mit einer derartigen Walze kann das aufzubringende viskose Material getrennt werden oder es können Profile eingebracht werden.

Die Walzen können auch unter einem von 90° verschiedenen Winkel zur relativen Vorschubrichtung angeordnet sein. Dadurch wird z. B. bei Beschichtungen überschüssiges Material zu einer Seite hin abgeleitet. Eine weitere Möglichkeit, überschüssiges Material nach einer Seite hin abzuleiten, besteht in der Verwendung einer spindeflörmigen Walze.

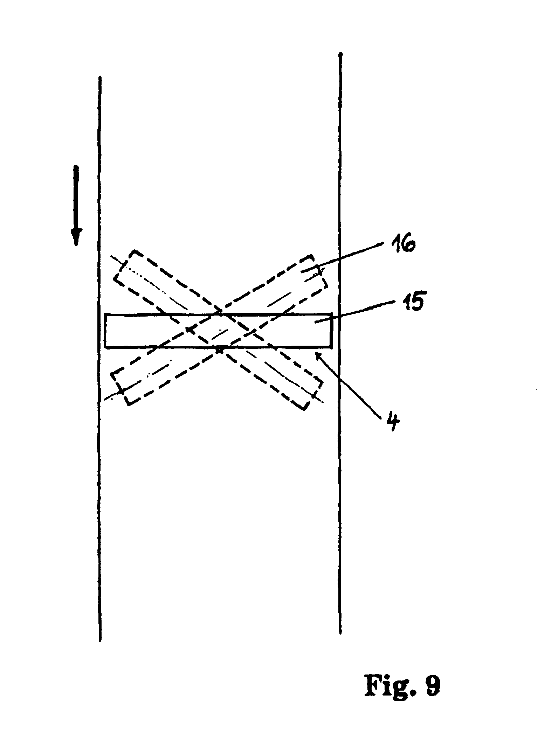

Andererseits kann im Sinne einer Kombination der Normalstellung 15 der Walze 4 quer zur Vorschubrichtung und der Schrägstellung 16, wie in Fig. 9 gezeigt, eine bessere Verteilung des Materials erreicht werden. Dies wird beispielsweise erreicht, indem die Walze gegenüber der Vorschubrichtung während des Beschichtungsvorgangs so verstellt wird, dass das überschüssige Material auf der zu beschichtenden Fläche bleibt.

Anstelle von Walzen können, wie in Fig. 8 gezeigt, als umlaufende Flächen auch Bänder 15 eingesetzt werden, die über zwei im Abstand voneinander parallel angeordnete Umlenkwalzen 16, 17 laufen. Für bestimmte Anwendungen, in denen der freie Umfang einer Walze, auf dem sich das Luftpolster aufbauen kann, nicht lang genug ist, können Bänder vorteilhaft sein, weil der Weg und die Laufzeit zum Aufbau des Luftpolsters länger sind.

## Patentansprüche

1. Verfahren zur berührungslosen Beschichtung eines Trägers (1) mit einem viskosen Material und/oder berührungslosen Umformung einer formlos auf einen Träger (1) aufgebrachten Materialmenge (2) und/oder Verteilung eines viskosen Materials auf einem Träger (1) indem der Träger relativ zu einer mit hoher Geschwindigkeit umlaufenden Fläche, gebildet aus mindestens einer rotierenden Walze und/oder einem über Walzen laufenden Band, bewegt wird,
das auf den Träger aufgebrachte viskose Material zwischen Träger und umlaufender Fläche hindurchgeführt wird,
wobei über ein Luftpolster, dass sich an der mit hoher Geschwindigkeit umlaufenden Fläche aufbaut, ein Kraft- bzw. Impulsübertrag auf das viskose Material erfolgt und dadurch ein berührungsloses Beschichten, Umformen und/oder Verteilen des viskosen Materials stattfindet.

2. Vorrichtung zur Durchführung des Verfahrens nach Anspruch 1, **dadurch gekennzeichnet, dass** die mit hoher Geschwindigkeit umlaufende Fläche gebildet wird aus mindestens einer rotierenden Walze und/oder einem über Walzen laufenden Band.

3. Vorrichtung nach Anspruch 2, **dadurch gekennzeichnet, dass** die Walze direkt über ihre Nabe oder indirekt über einen Treibriemen durch einen Motor angetrieben ist.

4. Vorrichtung nach Anspruch 3, **dadurch gekennzeichnet, dass** der Antrieb der Walze mit Luft erfolgt, der gleichzeitig zur Kühlung der Walze dient.

## Claims

1. Method for the contactless coating of a substrate (1) with a viscous material and/or contactless deformation of a quantity of material (2) which is applied in unshaped form to a substrate (1) and/or distribution of a viscous material over a substrate (1) by the substrate being moved relative to a surface which is rotated at high speed and is formed by at least one rotating roller and/or a belt which runs over rollers,
the viscous material which has been applied to the substrate being guided through between substrate and rotating surface,
with force or momentum being transmitted to the viscous material via an air cushion which builds up at the surface rotating at high speed, resulting in contactless coating, deformation and/or distribution of the viscous material.

2. Apparatus for carrying out the method according to Claim 1, **characterized in that** the surface which is rotating at high speed is formed by at least one rotating roller and/or a belt which runs over rollers.

3. Apparatus according to Claim 2, **characterized in that** the roller is driven by a motor, either directly via its hub or indirectly via a drive belt.

4. Apparatus according to Claim 3, **characterized in that** the roller is driven using air which is simultaneously used to cool the roller.

## Revendications

1. Procédé pour le revêtement sans contact d'un support (1) avec une matière visqueuse et/ou pour la déformation sans contact d'une quantité de matière (2) appliquée sans forme sur un support (1) et/ou pour la répartition d'une matière visqueuse sur un support (1) en déplaçant le support par rapport à une surface tournant à grande vitesse, constituée d'au moins un cylindre en rotation et/ou d'une bande passant sur des cylindres,
en guidant la matière visqueuse appliquée sur le support entre le support et la surface en rotation,
un transfert de force ou d'impulsion s'exerçant sur la matière visqueuse par le biais d'un coussin d'air, qui se forme sur la surface tournant à grande vitesse, et de ce fait un revêtement, une déformation et/ou une répartition sans contact de la matière visqueuse ayant lieu.

2. Dispositif pour mettre en oeuvre le procédé selon la revendication 1, **caractérisé en ce que** la surface tournant à grande vitesse est formée à partir d'au moins un cylindre en rotation et/ou d'une bande tournant sur des cylindres.

3. Dispositif selon la revendication 2, **caractérisé en ce que** le cylindre est directement entraîné par son moyeu, ou indirectement par le biais d'une courroie d'entraînement, par un moteur.

4. Dispositif selon la revendication 3, **caractérisé en ce que** l'entraînement du cylindre s'effectue avec de l'air qui sert simultanément au refroidissement du cylindre.
